Europäisches Patentamt

European Patent Office

Office européen des brevets

(19)

(11) Veröffentlichungsnummer: **0 250 817 B1**

(12) **EUROPÄISCHE PATENTSCHRIFT**

(45) Veröffentlichungstag der Patentschrift: **30.10.91**

(51) Int. Cl.⁵: **A01C 17/00, A01C 15/00**

(21) Anmeldenummer: **87107099.1**

(22) Anmeldetag: **15.05.87**

(54) **Verteilmaschine.**

(30) Priorität: 03.07.86 DE 3622288
22.07.86 DE 3624751
05.11.86 DE 8629598 U

(43) Veröffentlichungstag der Anmeldung:
**07.01.88 Patentblatt 88/01**

(45) Bekanntmachung des Hinweises auf die
Patenterteilung:
**30.10.91 Patentblatt 91/44**

(84) Benannte Vertragsstaaten:
**DE FR GB IT NL**

(56) Entgegenhaltungen:
**EP-A- 0 075 313        EP-A- 0 159 686
DE-A- 1 457 859        DE-B- 2 319 308
FR-A- 2 134 584        FR-A- 2 544 162**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Dreyer, Heinz, Dipl.-Ing. Univ. Dr.
agr.
Am Amazonenwerk 7
W-4507 Hasbergen(DE)**

**Beschreibung**

Die Erfindung betrifft eine Verteilmaschine gemäß des Oberbegriffes des Anspruches 1.

Eine derartige Verteilmaschine ist bereits durch die deutsche Patentschrift 23 19 308 bekannt. Bei dieser Verteilmaschine sind am Rahmen der Maschine höhenverstellbare Abstellstützen angeordnet.Die Abstellstützen, vor allem die hintere Abstellstütze, ist in einem sehr großen Abstand zum Schwerpunkt der Maschine angeordnet.

Der Erfindung liegt die Aufgabe zugrunde, die Handhabung, insbesondere den Transport der vom Schlepper abgekuppelten Maschine wesentlich zu verbessern sowie den Ankuppelvorgang in einfacher Weise durchführen zu können.

Diese Aufgabe wird erfindungsgemäß durch die keinnzeichnenden Maßnahmen des Anspruches 1 gelöst.

Aufgrund dieser Maßnahmen sind Laufrollen vorgesehen, welche in einem derartig kurzen Abstand hinter dem Schwerpunkt der Maschine angeordnet, daß man nur geringe Kräfte benötigt, wenn man die Maschine am Behälter anfaßt, um die andere Stütze vom Boden abzuheben. Dies heißt, daß man die Maschine nur leicht anzuheben braucht, und dann nach vorn zum Schlepper schieben oder rollen kann oder aber auch vom Schlepper wegschieben kann. Dadurch, daß der Abstand äußerst klein ist, braucht man trotz einer sehr schweren Maschine diese nur leicht von der Stütze abheben oder abdrücken, so daß man sie mit einer sehr geringen Kraft, beispielsweise von etwa 10 kg, ohne weiteres bequem abheben oder verschwenken kann. Hierbei sollte der Abstand der Laufräder zum Schwerpunkt so gewählt werden, daß durch das Anheben oder Herunterdrücken der Maschine der Schwerpunkt direkt über die Räder zu schwenken ist, ohne daß die betreffende Person, die die Verteilmaschine durch Rollen transportieren will, sich dabei zu stark beugen muß. Somit entfallen praktisch die senkrecht zunächst notwendigen Kräfte, wenn sich der Schwerpunkt direkt oberhalb der Drehachse der Laufrollen befindet; man kann die Maschine nun bequem vor sich hin- und herschieben. Man braucht nur noch die Balance zu halten und den Fahrwiderstand überwinden. Des weiteren muß der Abstand der Laufräder zum Schwerpunkt so gewählt werden, daß auch dann, wenn der Schwerpunkt durch Anheben der Maschine zur anderen Seite der Räderaufstands- linie hinaus gerät, daß die Maschine dann nicht umkippt, sondern wiederum nur so weit überkippt, daß sie auf Teilen des Rahmens der Verteilmaschine sicher aufsteht. Hierdurch wird die Verletzungsgefahr durch Umkippen der Maschine ausgeschlossen. Des weiteren sollte dieser Abstand dann auch so gewählt sein, daß die Maschine mit leichter Kraft wieder in ihre Abstellposition zurückschwenkbar ist. Von den benötigten Kräften her, könnten die Laufrollen praktisch auch unter dem Schwerpunkt liegen, aber dann würde das Ankuppeln an die Arme des Schlepperdreipunktkrafthebers erschwert werden. Damit einerseits ein kippsicheres Abstellen der Maschine nach dem Abkuppeln von dem Schlepperkraftheber und dem Abstellen auf dem Boden eine Kippsicherheit gegeben ist und andererseits man nur geringe Kräfte braucht, um evtl. auch eine Verteilmaschine, bei der sich im Vorratsbehälter noch Material befindet, bequem anheben und über die Laufrollen an einen bestimmten Platz schieben bzw. rollen kann, ist erfindungsgemäß vorgesehen, daß der horizontale Abstand zwischen der Drehachse der Laufrolle und dem Schwerpunkt kleiner als 1/5, jedoch größer als 1/10 der Gesamtlänge der Maschine ist. Dadurch das die Abstellstüzten mit den Laufrollen gemeinsam am Rahmen angeordnet sind, ergibt sich sowohl eine Konstruktionsals auch eine Handhandungvereinfachung für den Landwirt beim Hochklappen der Abstellstützen.

Durch die EP-A-01 59 686 ist ein von Hand zu schiebendes Einscheibenstreugerät bekannt. Dieses Streugerät weist ein aus zwei Laufrädern bestehendes Fahrwerk auf, so daß zum Streuen von Material das Gerät über den Boden geschoben werden kann. Weiterhin ist eine Abstellstütze vorgesehen. Hierbei sind die Laufräder und die Abstellstüzte so angeordnet, daß der Schwerpunkt des Gerätes sich zwischen den Laufrädern und der Abstellstüzt befindet.

Somit braucht die Verteilmaschine auf ihrer Hinterseite von Hand nur leicht angehoben werden, so daß der hintere auf dem Boden aufsitzende Teil vom Boden freikommt und die Verteilmaschine kann dann sehr leicht von Hand geschoben werden. Gleichzeitig sind die als Rollen oder Laufräder ausgebildeten Abstellstützen an dem Rahmen der Verteilmaschine so angeordnet, daß die vordere Hälfte bzw. der vordere Teil der Verteilmaschine so auf dem Boden abgestellt wird, daß mit dem Dreipunktkraftheber eines Schleppers, der nicht bis auf den Boden abgesenkt werden kann, die Verteilmaschine bequem an den Dreipunktkraftheber des Ackerschleppers angekuppelt werden kann. Hierbei ist es von Vorteil, daß die Abstellstützen in Fahrtrichtung gesehen in einem Abstand vor dem Schwerpunkt der Verteilmaschine an dem Rahmen angeordnet sind.

Um die über die Abstellstützen auf den Boden abgestellte Verteilmaschine bequem vom Schlepper aus mit einem Schnellkuppler des Dreipunktkrafthebers ankuppeln und abkuppeln zu können, ist erfindungsgemäß vorgesehen, daß der Abstand zwischen Rahmenunterkante der Maschine und der Aufstandsfläche der Laufrollen mindestens 10 cm beträgt.

Um die Maschine nach dem Ankuppeln an den Dreipunktkrafheber des Schleppers bequem beladen zu können und so weit wie möglich nach unten auf den Boden absenken zu können, so daß die Befüllkante des Vorratsbehälters möglichst niedrig ist, ist erfindungsgemäß vorgesehen, daß die Laufrollen mittels eines Gelenkes nach oben schwenkbar angeordnet sind.

Des weiteren ist erfindungsgemäß vorgesehen, daß zu den Laufrollen in einem Abstand zu diesen und auf der anderen Seite des Schwerpunktes der Maschine weitere Abstellstützen am Rahmen der Maschine angeordnet sind. Hierdurch wird erreicht, daß die Verteilmaschine in einer horizontalen und parallelen Lage zur Bodenoberfläche abgestellt werden kann. Des weiteren wird hierdurch erreicht, daß die Verteilmaschine, auch wenn sich noch Material im Vorratsbehälter befindet, kippsicher auf dem Boden abgestellt werden kann.

In bevorzugter Weise ist erfindungsgemäß vorgesehen, daß die Laufrollen zumindest an den den Dreipunktkupplungselementen am nächsten gelegenen Abstellstützen angeordnet sind. Hierdurch wird erreicht, daß die Maschine, in dem der Benutzer der Verteilmaschine die Verteilmaschine am hinteren Rand des Vorratsbehälters anfassen, bequem anheben und dann so sehr bequem an den Dreipunktkraftheber des Schleppers, an dem sie angekuppelt werden soll, heranrollen kann. Des weiteren ist es auch möglich, daß der Landwirt, wenn er die Maschine von Hand an einen Dreipunktkraftheber ohne Schnellkuppler ankuppeln will, sie sehr bequem im letzten Bereich, in dem er den Kuppelvorgang ausführt, in die richtige Position bringen kann, in dem er in unmittelbarer Nähe der Dreipunktkupplung die Maschine von Hand genau in Kuppelposition rollt kann.

Wenn sämtliche Abstellstützen eine Laufrolle aufweisen, kann die Maschine sehr leicht auch über längere Strecken geschoben werden, auch dann, wenn sich noch Dünger im Vorratsbehälter befindet.

In einer besonderen Ausführungsform ist erfindungsgemäß vorgesehen, daß die an einer Seite der Maschine angeordneten Abstellstützen jeweils zu einer Baueinheit zusammengefaßt sind. Hierdurch ergibt sich eine äußerst einfache Ausbildung der Abstellstützen.

Des weiteren ist erfindungsgemäß vorgesehen, daß die Abstellstützen lösbar am Rahmen angeordnet sind. Hierdurch wird erreicht, daß die Abstellstützen auch noch nachträglich an die Verteilmaschine anzuordnen sind. Hierbei ist vorgesehen, daß an dem Rahmen der Maschine Laschen angeordnet sind, an denen die Lagerlaschen der Abstellstützen zu befestigen sind. Infolge dieser Maßnahme ist es möglich, daß bereits serienmäßig sämtliche Verteilmaschine mit Laschen versehen werden, an denen dann später auch noch nach Jahren, der Landwirt in einfacher Weise die Abstellstützen selbst in äußerst kurzer Zeit befestigen kann.

Außerdem sieht die Erfindung noch vor, daß die Abstellstützen in zwei Stellungen mittels eines Schnellverschlusses oder -arretierungselementes arretierbar sind. Hierbei kann der Schnellverschluß oder das Schnellarretierungselement als Federhaken, federbelasteter Bolzen, Federzinken etc. ausgebildet sein. Hierdurch ergibt sich eine bequeme und einfache Verstellung für die Abstellstützen.

Weitere Einzelheiten der Erfindung sind den übrigen Unteransprüchen, der Beispielsbeschreibung und den Zeichnungen zu entnehmen. Hierbei zeigen

Fig. 1    eine Verteilmaschine in der Seitenansicht mit Abstellstützen in der Abstellposition, in vergrößertem Maßstab,

Fig. 2    die Anordnung der Abstellstützen in der Ansicht II - II, an dem Rahmenrohr der Verteilmaschine,

Fig. 3    die Verteilmaschine in der Fahrstellung und

Fig. 4    die Verteilmaschine in nach vorn übergekippter Abstellstellung und

Fig. 5    eine weitere erfindungsgemäß ausgebildete Verteilmaschine in Prinzipdarstellung und in der Seitenansicht.

Die Verteilmaschine ist als Zentrifugaldüngerstreuer 1 ausgebildet. Der Zentrifugaldüngerstreuer 1 weist den Vorratsbehälter 2, den Rahmen 3 sowie die als Scheibenstreuwerk 4 ausgebildete Verteileinrichtung auf. Im unteren Bereich des Vorratsbehälters 2 ist in nicht dargestellter und bekannter Weise ein Schieber angeordnet, der mit einer Auslauföffnung im Boden des Vorratsbehälters 2 zusammenwirkt, über die das sich im Vorratsbehälter 2 befindliche Material, beispielsweise Dünger, dem Zentrifugalstreuwerk 4, in einstellbaren Mengen zugeführt wird. An dem Rahmen 3 sind die obere Dreipunktkupplung 5 sowie in einem Abstand quer zur Fahrtrichtung die beiden unteren Dreipunktkupplungsbolzen 6 angeordnet. Über die obere Dreipunktkupplung 5 und die beiden unteren Dreipunktkupplungsbolzen 6 ist der Zentrifugaldüngerstreuer 1 in bekannter und daher nicht dargestellter Weise an den Dreipunktkraftheber eines Ackerschleppers anzubauen. Die obere Dreipunktkupplung 5 weist insgesamt drei Bohrungen 7 auf, durch die der Bolzen der oberen Dreipunktkupplung 5 gesteckt werden kann, damit eine optimale Anpassung bei der Ankuppelung des Oberlenkers an den Dreipunktkraftheber des Schleppers erfolgen kann.

An dem Rahmen 3 sind beiderseits der Verteilmaschine die beiden Abstellstützen 8 angeordnet.

Jeder dieser Abstellstützen 8 weist das waagerecht verlaufende Rohr 9 auf, welches im hinteren Bereich abgewinkelt ist. Der abgewinkelte Bereich des Rohres 9 bildet den hinteren Abstellfuß 10. Im vorderen Bereich ist an dem Rohr 9 der Abstellstütze die Laufrolle 11 frei drehbar gelagert. Die Laufrolle 11 ist über das Verbindungsstück 12 und der Welle 13 an dem Rohr 9 angeordnet. Das Rohr 9 der Abstellstütze 8 ist über die Laschen 14 an den am Rahmen 3 angeschweißten Lagerlaschen 15 mittels der Schrauben 16 lösbar angeordnet. Somit sind also an dem Rahmen 3 der Maschine Laschen 15 angeordnet, an denen die Lagerlaschen 14 der Abstellstützen 9 in einfacher Weise auch noch nachträglich zu befestigen sind. Des weiteren ist jede Abstellstütze 8, die an einer Seite der Maschine angeordnet ist, zu einer Baueinheit zusammengefaßt. Da auf jeder Seite der Verteilmaschine eine Abstellstütze 8 angeordnet ist, befindet sich auf beiden Seiten der Verteilmaschine eine Laufrolle 11. Die Laufrolle 11 ist gegenüber dem Abstellfuß 10 näher an den Dreipunktkupplungselementen 6 angeordnet.

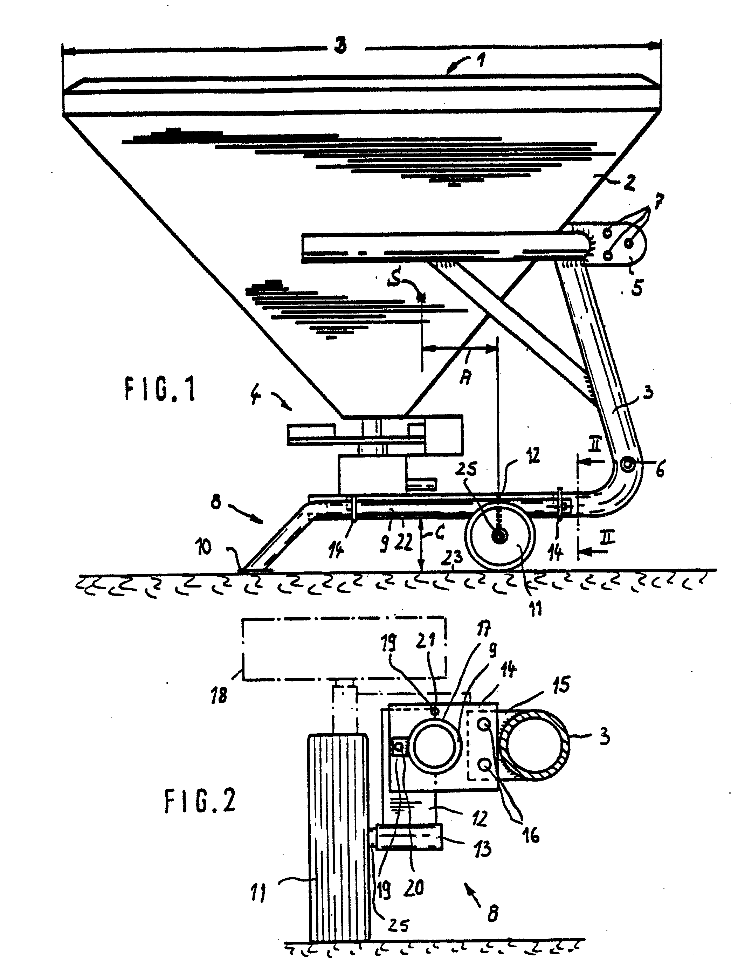

Die als Abstellstützen ausgebildeten Abstellfüße 10 sind gemeinsam mit den Laufrollen 11 in der Lagerung 17 der Lagerlasche 14 in die in Fig. 2 mit strichpunktierten Linien angedeutete Stellung 18 hochschwenkbar. In der Abstellstellung wird die Abstellstütze 8 durch den Bolzen 19 in der Bohrung 20 in der Lagerlasche 14 arretiert. In der hochgeschwenkten Position 18 wird die Abstellstütze 8 durch den in die Bohrung 21 eingesteckten Bolzen 19 arretiert.

Die als Laufrollen 11 ausgebildeten Abstellstützen sind in einem Abstand A vor dem Schwerpunkt S der Verteilmaschine angeordnet. Der Abstand A ist der horizontale Abstand zwischen der Drehachse 13 der Laufrolle 11 und dem Schwerpunkt S der Maschine. Dieser Abstand ist kleiner als 1/5, jedoch größer als 1/10 der Gesamtlänge B der Maschine. Zu den Laufrollen 11 sind in einem Abstand zu den Laufrollen und auf der anderen Seite des Schwerpunktes S der Maschine die weiteren als Abstellfüße 10 ausgebildeten Abstellstützen angeordnet.

Die Abstellstützen 8 bzw. die Laufrollen 11 und die Abstellfüße 10 weisen eine derartige Höhe auf, daß in der nach unten geschwenkten Stellung der Abstellstützen 8 ein Abstand C zwischen der Rahmenunterkante 22 der Maschine und Aufstandsfläche 23 der Laufrollen 11 bzw. der Abstellfüße 10 von mindestens 10 cm vorhanden ist. Hierdurch bekommen die unteren Dreipunktkupplungselemente 6 einen derartig großen Abstand zur Bodenoberfläche 23, daß die Verteilmaschine 1 bequem mit Schnellkuppelelementen des Dreipunktkrafhebers des Schleppers an dem Schlepper bequem angekuppelt werden kann.

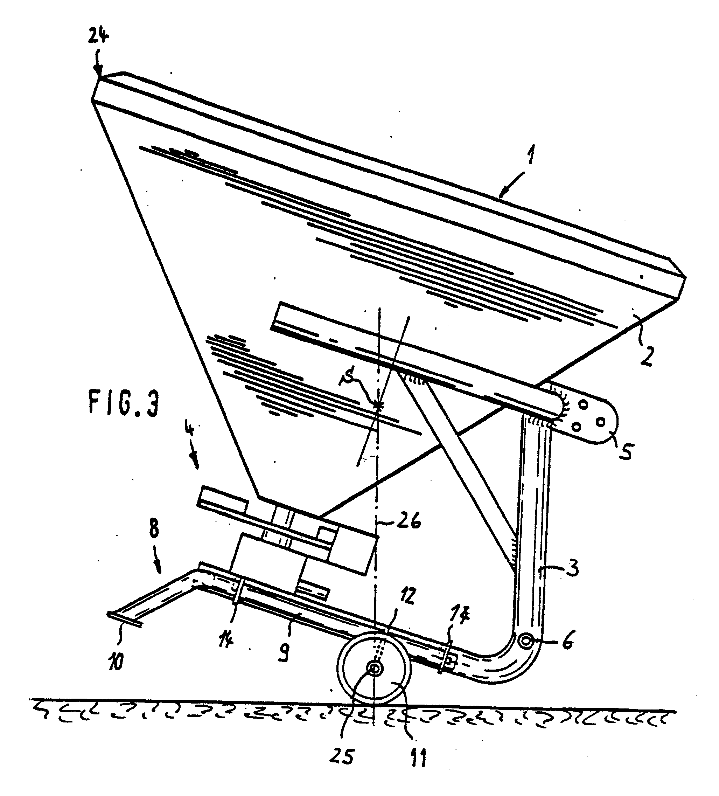

Um die Verteilmaschine 1 transportieren zu können, wird die Verteilmaschine entsprechend der in Fig. 3 dargestellten Position angehoben, indem der Bedienungsmann die Verteilmaschine vorzugsweise am hinteren Rahmen 24 des Vorratsbehälters 2 anfaßt und leicht anhebt. In dieser Position befindet sich der Schwerpunkt S genau oberhalb des Drehpunktes 25 der Laufrolle 11, wie dieses durch die mit strichpunktierten Linie angedeutete Senkrechte 26 verdeutlicht ist. In dieser Position läßt sich die Verteilmaschine 1 bequem hin- und herrollen und zum Kuppelvorgang beispielsweise an den Dreipunktkrafheber eines Schleppers heranschieben. In dieser Position braucht der Bedienungsmann nur noch die Balance zu halten und den Fahrwiderstand zum Rollen bzw. zum Bewegen der Maschine überwinden.

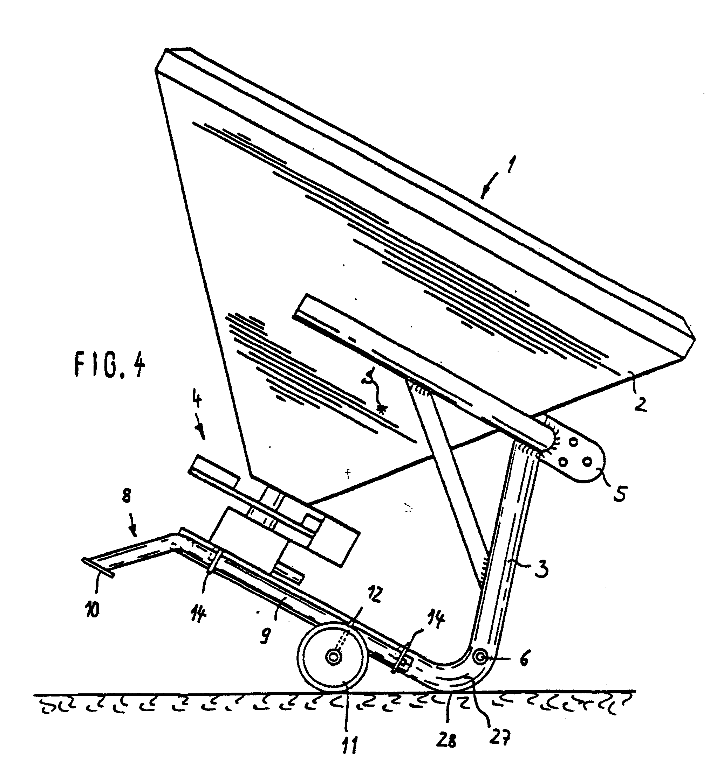

Falls die Maschine in die in Fig. 4 dargestellte Position kippt, muß sichergestellt sein, daß die Verteilmaschine nicht ganz nach vorn über die Dreipunktkupplungselemente auf die Dreipunktkupplungselemente 5 und 6 fällt. Hierzu ist es erforderlich, daß die Laufrolle 11 derart am Rahmen 3 angeordnet ist, daß die Verteilmaschine nicht in eine Position geraten kann, bei der sie, wenn sie auf der Laufrolle 11 und dem vorderen Teil 27 des Rahmens 3 der Verteilmaschine aufsteht, der Schwerpunkt der Verteilmaschine 1 vor der Aufstandsfläche des Rahmens 3 auf den Boden befindet. Der Schwerpunkt S muß also noch immer hinter der Aufstandsfläche 28 bleiben, so daß die Verteilmaschine nicht nach vorn auf die Dreipunktkupplungselemente 5 und 6 fallen kann. Andererseits müssen die Laufrollen 11 und die Abstellfüße 10 so an der Verteilmaschine angeordnet sein, daß immer eine kippsichere, stabile Lage der abgestellten Maschine sichergestellt bleibt.

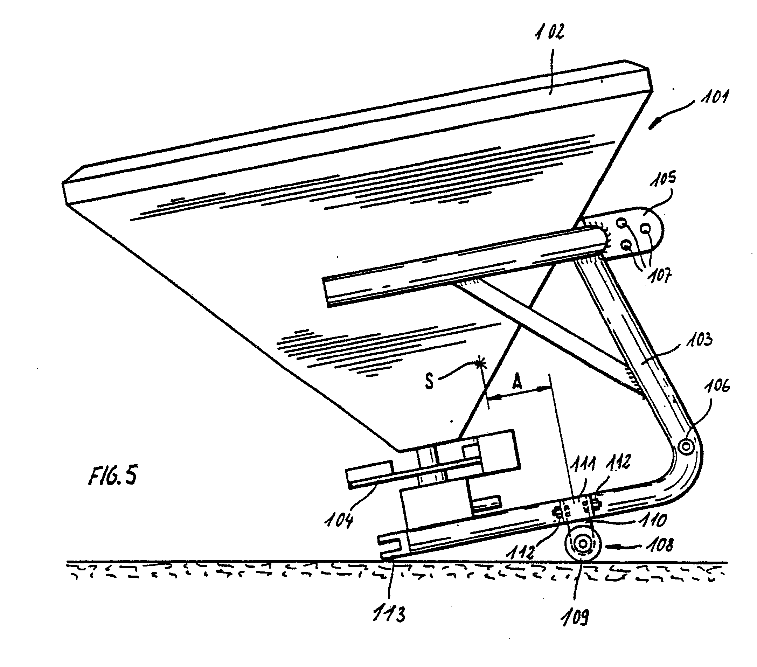

Die Verteilmaschine gemäß Fig. 5 ist als Zentrifugaldüngerstreuer 101 ausgebildet. Der Zentrifugaldüngerstreuer weist den Vorratsbehälter 102 den Rahmen 103 sowie die als Scheibenstreuwerk 104 ausgebildet Verteileinrichtung auf. Im unteren Bereich des Vorratsbehälters 102, in nicht dargestellter und bekannter Weise, ist ein Schieber angeordnet, der mit einer Auslaßöffnung zusammenwirkt, über die das sich im Vorratsbehälter 102 befindliche Material dem Zentrifugalstreuwerk 104 in einstellbaren Mengen zugeführt wird. An dem Rahmen 103 ist die obere Dreipunktkupplung 105, sowie in einem Abstand quer zur Fahrtrichtung die beiden unteren Dreipunktkupplungsbolzen 106 angeordnet. Über die obere Dreipunktkupplung 105 und die beiden unteren Dreipunktkupplungsbolzen 106 ist der Zentrifugaldüngerstreuer 101 in bekannter und daher nicht dargestellter Weise an den Dreipunktkrafheber eines Ackerschleppers anzubauen. Die obere Dreipunktkupplung 105 weist insgesamt drei Bohrungen 107 auf, durch die der Bolzen der oberen Dreipunktkupplung 105 gesteckt werden kann, damit eine optimale Anpassung bei der Ankupplung des Oberlenkers des Dreipunktkrafthebers des Ackerschleppers erfolgen kann.

An der vorderen Hälfte des Rahmens 103 ist auf beiden Seiten des Zentrifugaldüngerstreuers 1ß1 die Abstellstütze 108 angeordnet. Die Abstellstütze 108 ist jeweils als Laufrolle 109 ausgebildet. Zur Befestigung der Laufrolle 109 ist an der Laufrolle 109 die Halterung 110 drehbar befestigt. Des weiteren ist an dem Rahmen 103 die Lasche 111 angeschweißt, an der die Halterung 110 mittels der Schrauben 112 in unterschiedlichen Höhen zu befestigen ist. Die Laufrollen 109 sind an der vorderen Hälfte des Rahmens 103 derart befestigt, daß sie in einem Abstand A vor dem Schwerpunkt S des Zentrifugaldüngerstreures angeordnet sind. Die Laufrollen 109 sind also in Fahrtrichtung gesehen so an dem Zentrifugaldüngerstreuer 101 angeordnet, daß der hintere Rahmenteil 113 beim Abstellen des Zentrifugaldüngerstreuers 101 auf dem Boden auf dem Boden aufsteht.

Um den Zentrifugaldüngerstreuer 101 von Hand rangieren zu können, muß der Landwirt lediglich am hinteren Teil des Vorratsbehälters 102 den Zentifugaldüngerstreuer 101 leicht anheben oder am vorderen Teil den Zentrifugaldüngerstreuer 101 herunterdrücken, so daß er über die Laufrollen 109 den Zentrifugaldüngerstreuer 101 bequem an seinen Bestimmungsplatz rollen kann.

Des weiteren sind die Laufrollen 109 derart am Rahmen 103 des Zentrifugaldüngerstreuers angeordnet, daß sich beim Abstellen des Zentrifugaldüngerstreuers 101 auf dem Boden die unteren Kuppelbolzen 106 in einer derartigen Höhenlage befinden, damit der Zentrifugaldüngerstreuer 101 bequem an den Dreipunktkraftheber eines Schleppers angebaut werden kann. Die Höheneinstellung der Laufrollen 109 mittels der Schraubbolzen 112 an der Lasche 11 richtet sich danach, wie tief der Dreipunktkraftheber des Schleppers abgesenkt werden kann.

## Patentansprüche

1. Als Dreipunktanbaumaschine ausgebildete Verteilmaschine, insbesondere Düngerstreuer mit einem Rahmen, Vorratsbehälter und einer Verteileinrichtung, wobei die Verteilmaschine über Dreipunktkupplungselemente an den Drei-punktkraftheber eines Ackerschleppers anzu-kuppeln ist und an dem Rahmen Abstellstützen angeordnet sind, dadurch gekennzeichnet, daß die Abstellstützen zumindest teilweise Laufrollen aufweisen, daß die als Laufrollen (11) ausgebildeten Abstellstützen (8) nur in einem kleinen Abstand (A) vor oder hinter dem Schwerpunkt (S) der Maschine (1) angeordnet sind, daß die Abstellstützen (8) mit den Laufrollen (11) hochschwenkbar am Rahmen (3) angeordnet sind.

2. Verteilmaschine nach Anspruch 1, dadurch gekennzeichnet, daß der horizontale Abstand (A) zwischen der Drehachse (25) der Laufrolle (11) und dem Schwerpunkt (S) kleiner als 1/5, jedoch größer als 1/10 der Gesamtlänge (B) der Maschine (1) ist.

3. Verteilmaschine nach Anspruch 1 oder 2, dadurch gekennzeichnet, daß auf beiden Seiten der Maschine (1) am Rahmen (3) jeweils eine Laufrolle (11) angeordnet ist.

4. Verteilmaschine nach Anspruch 1, dadurch gekennzeichnet, daß der Abstand (C) zwischen Rahmenunterkante (22) der Maschine (1) und der Aufstandsfläche (23) der Laufrollen (11) mindestens 10 cm beträgt.

5. Verteilmaschine nach Anspruch 1 oder 5, dadurch gekennzeichnet, daß die Laufrollen (11) mittels eines Gelenkes (17) nach oben schwenkbar angeordnet sind.

6. Verteilmaschine nach Anspruch 1 oder 5, dadurch gekennzeichnet, daß zu den Laufrollen (11) in einem Abstand zu diesen und auf der anderen Seite des Schwerpunktes (S) der Maschine (1) weitere Abstellfüße (10) am Rahmen (3) der Maschine (1) angeordnet sind.

7. Verteilmaschine nach Anspruch 1, dadurch gekennzeichnet, daß die Laufrollen (11) zumindest an den den Dreipunktkupplungselementen (5,6) am nächsten gelegenen Abstellstützen angeordnet sind.

8. Verteilmaschine nach Anspruch 1, dadruch gekennzeichnet, daß sämtliche Abstellstützen (8) eine Laufrolle (11) aufweisen.

9. Verteilmaschine nach Anspruch 1, dadurch gekennzeichnet, daß die an einer Seite der Maschine (1) angeordneten Abstellstützen (8) jeweils zu einer Baueinheit zusammengefaßt sind.

10. Verteilmaschine nach Anspruch 1 oder 10, dadurch gekennzeichnet, daß die Abstellstützen (8) lösbar am Rahmen (3) angeordnet sind.

11. Verteilmaschine nach Anspruch 10, dadurch gekennzeichnet, daß an dem Rahmen (3) der Maschine (1) Laschen (15) angeordnet sind, an denen die Lagerlaschen (14) der Abstellstützen (8) zu befestigen sind.

12. Verteilmaschine nach Anspruch 1, dadurch gekennzeichnet, daß die Abstellstützen in zwei Stellungen mittels eines Schnellverschlusses oder Schnellarretierungselementes arretierbar sind.

**Claims**

1. A distributor in the form of a three-point hitchable implement, in particular a fertilizer distributor, with a frame, a hopper and a distributing arrangement, the distributor being hitchable by means of three-point coupling members to the three-point power lift of a tractor, and parking supports being disposed on the frame, characterised in that the parking supports have at least in part castors, that the parking supports (8) in the form of castors (11) are disposed at only a short distance (A) in front of or behind the centre of gravity (S) of the machine (1), and that the parking supports (8), with the castors (11), are disposed to be vertically pivotable on the frame (3).

2. A distributor according to Claim 1, characterised in that the horizontal distance (A) between the axis of rotation (25) of the castor (11) and the centre of gravity (S) is smaller than 1/5 yet greater than 1/10 of the overall length (B) of the machine (1).

3. A distributor according to Claim 1 or 2, characterised in that a castor (11) is arranged in each case on both sides of the machine (1) on the frame (3).

4. A distributor according to Claim 1, characterised in that the distance (C) between the lower edge (22) of the frame of the machine (1) and the ground-contact surface (23) of the castors (11) is at least 10 cm.

5. A distributor according to Claim 1 or 5, characterised in that the castors (11) are arranged to be pivotable vertically upwards by means of a linkage (17).

6. A distributor according to Claim 1 or 5, characterised in that, in addition to the castors (11), at a distance therefrom and on the other side of the centre of gravity (S) of the machine (1), further parking feet (10) are disposed on the frame (3) of the machine (1).

7. A distributor according to Claim 1, characterised in that the castors (11) are disposed at least on the parking supports located nearest to the three-point coupling members (5, 6).

8. A distributor according to Claim 1, characterised in that all the parking supports (8) have a castor (11).

9. A distributor according to Claim 1, characterised in that the parking supports (8) located on one side of the machine (1) are each combined into a constructive unit.

10. A distributor according to Claim 1 or 10, characterised in that the parking supports (8) are removably arranged on the frame (3).

11. A distributor according to Claim 10, characterised in that there are disposed on the frame (3) of the machine (1) lugs (15), to which the bearing lugs (14) of the parking supports (8) are to be attached.

12. A distributor according to Claim 1, characterised in that the parking supports are lockable in two positions by means of a rapid closure or of a rapid locking member.

**Revendications**

1. Distributeur en forme de distributeur pour un attelage en trois points notamment distributeur d'engrais comprenant un châssis, un réservoir d'alimentation et un organe de distribution, le distributeur se fixant par des éléments d'attelage en trois points sur le dispositif d'attelage en trois points d'un tracteur agricole, des béquilles étant prévues sur le châssis, distributeur caractérisé en ce que les béquilles comportent au moins en partie des roues de roulement (11) et les roues en forme de béquilles d'appui (8) ne se trouvent qu'à une faible distance (A) en avant ou en arrière du centre de gravité (S) de la machine (1) pour que les béquilles (8) avec les roues (11) puissent être relevées par rapport au châssis (3).

2. Distributeur selon la revendication 1, caractérisé en ce que la distance horizontale (A) entre l'axe de rotation (25) de la roue (11) et le centre de gravité (S) est inférieure à 1/5ème, mais supérieure à 1/10ème de la longueur d'ensemble (B) du distributeur (B).

3. Distributeur selon la revendication 1 ou 2, caractérisé en ce que des deux côtés du distributeur (1), le châssis (3) est muni chaque fois d'une roue (11).

4. Distributeur selon la revendication 1, caractérisé en ce que la distance (C) entre le bord inférieur (22) du châssis du distributeur (1) et la surface d'appui (23) des roues (11) est au moins égale à 10 cm.

5. Distributeur selon la revendication 1 ou 5, caractérisé en ce que les roues (11) peuvent être basculées vers le haut par l'intermédiaire d'une articulation (17).

6. Distributeur selon la revendication 1 ou 5, caractérisé par d'autres béquilles (10) prévues sur le châssis (3) de la machine en plus des roues (11) et à une certaine distance de celles-ci et de l'autre côté du centre de gravité (S) du distributeur (1).

7. Distributeur selon la revendication 1, caractérisé en ce que les roues (11) sont prévues au moins sur les béquilles les plus proches des éléments d'attelage en trois points (5, 6).

8. Distributeur selon la revendication 1, caractérisé en ce que toutes les béquilles (8) comporte une roue de roulement (11).

9. Distributeur selon la revendication 1, caractérisé en ce que les béquilles (8) prévues d'un côté du distributeur (1) sont réunies en un ensemble constructif.

10. Distributeur selon la revendication 1 ou 10, caractérisé en ce que les béquilles (8) sont prévues amovibles sur le châssis (3).

11. Distributeur selon la revendication 10, caractérisé par des pattes (15) prévues sur le châssis (3) du distributeur (1), pattes sur lesquelles se fixent les pattes de palier (14) des béquilles (8).

12. Distributeur selon la revendication 1, caractérisé en ce que les béquilles peuvent se bloquer dans deux positions par l'intermédiaire d'un moyen de fermeture rapide ou d'un élément de blocage rapide.

FIG.1

FIG.2

FIG.3

FIG. 4

FIG.5